# EUROPEAN PATENT APPLICATION

(11) **EP 4 220 782 A1**
(43) Date of publication of application: **02.08.2023**
(21) Application number: 22154354.9
(22) Date of filing: 31.01.2022
(51) Int. Cl.: H01M 6/50, H01M 10/48

(54) **BATTERY CELL AND BATTERY ARRANGEMENT**

(71) Applicant: ABB SCHWEIZ AG, 5400 Baden (CH)
(72) Inventor: HE, Minglong, 5400 Baden (CH); SCHULER, Gabriel, 6415 Arth (CH); CHARTOUNI, Daniel, 5430 Wettingen (CH); KRAMER, Axel, 8057 Zürich (CH)
(74) Representative: Qip Patentanwälte Dr. Kuehn & Partner mbB

(57) **Abstract**

A battery cell (20) is provided. The battery cell (20) comprises a cell body (21), at least two electrical terminals (30, 32) for providing and/or receiving electrical energy, and at least one pressure sensor (40) being arranged within and/or at the cell body (21) and comprising a pressure indicating area (42) which is configured for changing its visual appearance depending on a pressure (P) acting on the pressure sensor (40), wherein the pressure indicating area (42) is arranged such that it is visible from outside of the cell body (21).

## Description

### FIELD OF THE INVENTION

The invention relates to the field of battery cells, and battery arrangements. In particular, the invention relates to a battery cell, and to a battery arrangement comprising the battery cell.

### BACKGROUND OF THE INVENTION

An increasing number of vehicles, e.g. cars, trains, subways, busses, is equipped with battery cells, in particular high-performance battery cells. A typical high-performance battery cell may have a nominal capacity between 1 Ah and 1000 Ah and may be used for driving the corresponding vehicle, in particular for providing energy to a power train of the corresponding vehicle.

Conventional high-performance battery cells may be fully assembled as battery arrangements and encapsulated in modules. Then, the modules may be combined and encapsulated as battery packages. These battery packages may be arranged in the vehicles. In the most cases, the battery packages are not designed to be removed easily, e.g. in order to check one or more of the battery cells. In contrast, it is common practice that intense efforts have to be taken to determine an age and/or a State of Health (SOH) of the battery cells within the battery modules and/or within the battery packages.

The SOH is a figure of merit that indicates the battery level of degradation. The SOH represents a ratio between a current maximum effective capacity and an initial capacity of a battery. Due to a complex and nonlinear aging and degradation behavior of the battery cells, estimating the SOH may be very challenging. However, properly estimating the SOH may be essential to evaluate the battery life. It may provide an accurate knowledge on a current battery performance that may e.g. help to manage an energy distribution within the battery cells, battery arrangements and/or modules, and battery packs, and may lower their consumption and increase their lifetime.

Different approaches already have been employed for real-time SOH estimations. There are three main indicators that define this state, an internal resistance of the battery cell, an impedance of the battery cell, and/or its capacity. Most conventional experimental methods are conducted in laboratories since they require specific equipment (e.g., electrochemical impedance spectroscopy) and are often expensive and time consuming. They are based on collecting data and measurements that can be used to understand and evaluate the battery aging behavior. Those data may be beneficial to other SOH estimation methods, e.g., modelbased methods and machine learning methods.

The estimation of battery SOH may be a crucial topic for the battery industry and academic studies. There are various approaches to monitor the SOH via introducing pressure sensors to monitor the internal gas pressure, swell force on the electrode, and/or external cell swelling. However, the pressure sensors and analyzing methods used up to now may be very expensive and time-consuming and in the most cases complex and expensive electrical tests and/or an access to a Battery Management System (BMS) may be necessary. Further, in many cases space-consuming complex devices, e.g. pressure transducers and/or load cells, and their electrical connections are conventionally necessary.

### DESCRIPTION OF THE INVENTION

Therefore, it is an objective of the present invention to provide a battery cell which may enable an offline and/or online SOH monitoring and/or age estimation method without requiring complex instrumented laboratory-based tests. In particular, the battery cell may allow a user to estimate the SOH of the battery cell without any electrical tests, which is cost-efficient, space-saving, and time-efficient. It also offers an option to estimate the age and/or SOH of the battery cell without requiring access to a battery management system (BMS). In addition, it may also offer an option to estimate the age and/or SOH of the battery cell automatically, e.g. with the BMS.

Further, it is an objective of the present invention to provide a battery arrangement comprising at least two of the battery cells, the battery arrangement enabling an offline and/or online SOH monitoring and/or age estimation method without requiring complex instrumented laboratory-based tests. In particular, the battery arrangement may allow a user to estimate the SOH of the corresponding battery cells without any electrical tests, which is cost-efficient, space-saving, and time-efficient. It may also offer an option to estimate the age and/or SOH of the corresponding battery cells without requiring access to the BMS. In addition, it may also offer an option to estimate the age and/or SOH of the corresponding battery cells automatically, e.g. with the BMS.

These objectives are achieved by the subject-matter of the independent claims. Further exemplary embodiments are evident from the dependent claims and the following description.

In particular, an objective of the present invention is achieved by a battery cell, comprising: a cell body; at least two electrical terminals for providing and/or receiving electrical energy; and at least one pressure sensor being arranged within and/or at the cell body and comprising a pressure indicating area which is configured for changing its visual appearance depending on a pressure acting on the pressure sensor, wherein the pressure indicating area may be arranged such that it is visible from outside of the cell body.

The battery cells, in particular the high-performance battery cells, may comprise e.g. Liion cells. During an ageing and/or a degradation of the battery cells, an effective cell capacity may drop accompanied by various ageing features such as increased internal cell resistance and gas pressure within the battery cell. Further, materials of electrodes of the battery cells and electrolyte components may continuously degrade, resulting in lithium-ion loss and gas evolution. The cell swelling and the increased cell volume may be used as an analytical tool to do a quantitative estimation of the ageing and/or SOH of the battery cell. Thus, a pressure distribution and/or pressure magnitude information may be provided by the pressure sensor and may be utilized for the estimation of the age of the battery cell and/or an interpretation of the SOH within three steps:
Firstly, the visual appearance of the pressure indicating area may be interpreted with respect to the pressure originated from the swelling of the battery cell and acting on the pressure sensor. Secondly, the pressure may be correlated to the internal gas pressure and/or gas volume within the battery cell. Thirdly, the gas volume may be correlated to the ageing and/or SOH of the battery cell.

On the cell level, a user may read or interpret a current SOH of the battery cell directly through the visual appearance of the pressure indicating area being visible from outside of the battery cell. So, the battery cell enables a visual diagnostic method to indicate a battery condition, in particular the age and/or SOH of the battery cell. In addition, BESS (Battery Energy Storage System) service engineers may easily inspect and evaluate the battery conditions from outside of the battery cell. The battery cell may allow the user to estimate the SOH of the battery cell without any electrical tests, which is cost-effective, space-saving, and time-efficient. It also may offer an option to estimate the age and/or SOH without requiring access to a battery management system (BMS). Further, an offline and/or online SOH monitoring method may be used by the BMS on cell/module/pack level without requiring complex instrumented laboratory-based tests.

The pressure acting on the pressure sensor may be the pressure within the cell body and/or a pressure applied by an adjacent battery cell, if any. The pressure sensor may comprise or may consists of the pressure indicating area. The battery cell may be a high-performance battery cell having a nominal capacity between 1 Ah and 1000 Ah. The nominal capacity may be between 20 Ah and 500 Ah, e.g. between 25 Ah and 100 Ah. The electrical terminals may be arranged at opposing sides of the cell body. The electrical terminals may correspond to the poles of the battery cell. For example, one of the electrical terminals may correspond to the plus-pole and the other one of the electrical terminals may correspond to the minus-pole of the battery cell. The cell body may have a prismatic shape. For example, the cell body may have a cuboid shape.

According to an embodiment, the pressure indicating area may be configured to change its colour, transparency, and/or colour intensity depending on the pressure acting on the pressure sensor. For example, a colour of the pressure indicating area may change from white to pink when a pressure acts on the pressure sensor, wherein the intensity of the pink depends on an amount of the pressure. In particular, a colour intensity of the pressure indicating area may be directly related to the amount of pressure applied to the pressure sensor.

According to an embodiment, the pressure sensor comprises or consists of a pressure sensing sheet representing the pressure indicating area, and is arranged at an outer surface of the cell body. In this case, the pressure sensor may consist of the pressure indicating area wherein the pressure acting on the pressure sensor may be the pressure acting on the pressure indicating area. The pressure sensing sheet may be a conventional pressure sensing sheet as it is known from the prior art. The pressure sensing sheet may be referred to as tactile SOH indicator or tactile pressure indicating film. The tactile pressure indicating film may be attached to an outer surface of the cell body.

According to an embodiment, the pressure sensor comprises a reservoir within and/or at the cell body and a capillary connecting the reservoir with the pressure indicating area; an indicator liquid is accommodated within the reservoir; and the reservoir is configured for being squeezed by the pressure within the cell body such that the indicator liquid is pressed from the reservoir through the capillary towards the pressure indicating area depending on the pressure within the cell body. In this case, the pressure sensor is split into two main parts, i.e. the reservoir and the pressure indicating area, wherein the above pressure acting on the pressure sensor may be the pressure acting on the reservoir and not the pressure acting on the pressure indicating area.

Optionally, the pressure indicating area may comprise a scale or a legend for interpreting the change of the visual appearance of the pressure indicating area. The pressure indicating area including the scale may be referred to as dashboard or indicator part of the pressure sensor. The indicator liquid may be coloured, e.g. red, blue, green, or yellow. The indicator liquid may be an ink or another liquid. The capillary may comprise or may be a small tube or channel for guiding the indicator liquid from the reservoir to the pressure indicating area. The pressure sensor with the reservoir may be referred to as tactile SOH indicator. The reservoir may be a container. The user may read the age and/or SOH of the battery cell without any electrical tests or the requirement of a connection to a BMS.

According to an embodiment, the reservoir is arranged at an outer wall of the cell body. In this case, the pressure, e.g. an internal gas pressure, within the cell body may directly act on the reservoir thereby squeezing the indicator liquid out of the reservoir into the capillary and towards the pressure indicating area. Alternatively, the pressure may deform the cell body and the deformation of the cell body may cause the pressure acting on the reservoir.

According to an embodiment, the battery cell comprises a packaging film for at least partly encapsulating the cell body, wherein the reservoir is arranged between the cell body and the packaging film. In this case, the pressure, e.g. the internal gas pressure, within the cell body may deform the cell body and the deformed cell body may press the reservoir against the packaging film causing the pressure on the reservoir. Alternatively, if the reservoir is arranged at the cell body, the reservoir may be arranged between the cell body and another cell body of an adjacent battery cell.

According to an embodiment, the reservoir and the pressure indicating area may be arranged at the same side of the cell body or at different sides of the cell body. For example, the reservoir may be arranged at a lateral side of the battery cell and the pressure indicating area may be arranged at a top side of the battery cell. This may enable to measure the influence of the pressure in lateral direction while monitoring the pressure indicating area from above.

According to an embodiment, the pressure indicating area may comprise a cavity for accommodating the indicator liquid depending on the pressure within the cell body. So, if the indicator liquid is pressed to the pressure indicating area, the pressure indicating area, in particular the cavity, may be filled with the indicator liquid and may change its colour depending on the colour of the indicator liquid. The higher the pressure is, the more indicator liquid may be filled into the cavity. A liquid level within the cavity may be indicated by the scale next to or on the pressure indicating area, wherein the liquid level may be representative for the age and/or SOH of the battery cell.

Alternatively, instead of the cavity, the pressure indicating area may comprise a material for absorbing the indicator liquid such that it changes the visual appearance of the pressure indicating area.

According to an embodiment, the indicator liquid may be electrically conductive. For example, the indicator liquid may be an electrically conductive ink.

According to an embodiment, the battery cell comprises at least two electrical contacts arranged at a distance to each other within or at the cavity of the pressure indicating area, the electrical contacts being arranged for being connected to a battery management system and being configured for signalling the pressure within the cell body when the indicator liquid electrically connects both electrical contacts with each other. The electrical contacts may be configured such that they are electrically connected by the indicator liquid when a predetermined amount of indicator liquid is pressed into the cavity. The predetermined amount of indicator liquid may be representative for a predetermined pressure acting on the reservoir. The predetermined pressure may be representative for a predetermined age and/or state of health of the battery cell.

The electrical contacts may be configured such that, if the electrical contacts are connected to the BMS and if the indicator liquid electrically connects the electrical contacts, an electric circuit is closed and a small current flows through the electrical contacts and the indicator liquid. The BMS may sense the current and may estimate an age and/or a state of health of the battery cell depending on the sensed current, wherein the sensed current is representative for the predetermined amount of indicator liquid within the cavity. If there are more than two electrical contacts, e.g. arranged with predetermined distances to each other, e.g. such as in form of a scale, correspondingly more different liquid levels may be sensed depending on the electrical circuit closed by the indicator liquid and the corresponding electrical contacts. For example, N-1 liquid levels may be sensed by N different electrical contacts, with N being a natural number.

An objective of the present invention is achieved by a battery arrangement, comprising at least two of the above battery cells, wherein the battery cells are arranged adjacent to each other such that a deformation of one of the cell bodies of the battery cells causes a pressure on the pressure sensor of the other battery cell. The battery arrangement may be arranged in a battery module or may represent the battery module. One or more of the battery arrangements, e.g. battery modules, may be encapsulated in one single battery pack.

The above features, advantages and/or effects of the battery cell may be transferred to the battery arrangement. Therefore, a repetition of these features, advantages and/or effects is omitted and it is referred to the above explanations only in order to provide a concise description.

According to an embodiment, the battery arrangement comprises a spacer being arranged between the pressure sensors of the adjacent battery cells such that the pressure is transferred from one of the battery cells to the pressure sensor of the other battery cell by the spacer.

An objective of the present invention is achieved by a battery arrangement. The battery arrangement comprises at least one of the above battery cells, and a controller for estimating the age and/or the state of health of one or more of the battery cells by checking the visual appearance of the pressure indicating area of the corresponding pressure sensor.

The above features, advantages and/or effects of the battery cell and/or the above battery arrangement may be transferred to this battery module. Therefore, a repetition of these features, advantages and/or effects is omitted and it is referred to the above explanations only in order to provide a concise description.

The controller may be a part of a BMS. For example, a table and/or characteristic curve assigning the visual appearance to the pressure and a table assigning the pressure to estimated ages and/or states of health may be stored on a memory of the controller and may be investigated for estimating the ages and/or states of health. Alternatively, a table and/or characteristic curve assigning the visual appearance directly to the estimated ages and/or states of health may be stored on the memory of the controller for estimating the ages and/or states of health.

On the battery arrangement level, i.e. battery module and/or battery pack level, the user, especially the BESS service engineer, may choose to monitor the age and/or SOH of the corresponding battery cells in a continuous mode by connecting the battery arrangement to the BMS, in particular the controller. It may avoid a disassembly of the battery module and/or battery pack. This may be combined with and/or compared to other age/SOH estimation methods, for example, the conventional approach using the open circuit voltage profile.

According to an embodiment, the battery arrangement may comprise at least one optical sensor being coupled to the controller, being arranged such that the pressure indicating area is within a field of view of the optical sensor, and being configured for detecting the visual appearance of the corresponding pressure sensor of the battery cell and for generating a signal representing the visual appearance of the pressure sensor. The optical sensor may be a camera, e.g. a digital camera, e.g. a CCD-camera. The signal may be received by the controller.

In this case, on the battery arrangement level, i.e. battery module and/or battery pack level, the service engineer may access the real-time SOH data via the BMS using images of the pressure indicating area and/or directly using the images, e.g. in an online manner, thus avoiding the disassembly of the corresponding battery module and/or battery pack. In particular, the optical sensor may capture the image of all pressure indicating areas, e.g. through transparent windows within the battery module and/or battery pack. Afterwards, the photo could be processed to digital values for battery SOH mapping. The images may be taken in fixed time intervals, for example, once or twice a day, e.g. every 10 or 12 hours, wherein other time intervals may also be appropriate depending on the application. Alternatively, the images may be taken when the vehicle which is driven by the battery cells is activated or shut down.

According to an embodiment, the controller is coupled to the electrical contacts within or at the cavity of the pressure indicating area of the pressure sensor of the one or more battery cells, and is configured for sensing the current flowing through the electrical contacts because of the indicator liquid within the cavity electrically coupling the electrical contacts and for determining the pressure depending on the visual appearance of the pressure sensor depending on the sensed current.

These and other aspects of the invention will be apparent from and elucidated with reference to the embodiments described hereinafter.

### BRIEF DESCRIPTION OF THE DRAWINGS

The subject matter of the invention will be explained in more detail in the following text with reference to exemplary embodiments which are illustrated in the attached drawings.
Fig. 1 schematically shows a perspective view of an exemplary embodiment of a battery arrangement;
Fig. 2 schematically shows an exploded view of the battery arrangement of figure 1;
Fig. 3 schematically shows examples of diagrams for estimating a state of health of a battery cell;
Fig. 4 schematically shows a perspective view of an exemplary embodiment of a battery arrangement, a pressure sensor and a scale;
Fig. 5 schematically shows a perspective, partly exploded view of an exemplary embodiment of a battery cell in a first state;
Fig. 6 schematically shows a perspective, partly exploded view of the battery cell of figure 5 in a second state;
Fig. 7 schematically shows an exemplary embodiment of a pressure sensor;
Fig. 8 schematically shows a perspective, partly exploded view of an exemplary embodiment of a battery cell;
Fig. 9 schematically shows an exemplary embodiment of a pressure sensor;
Fig. 10 schematically shows an exemplary embodiment of a pressure sensor;
Fig. 11 schematically shows a perspective view of an exemplary embodiment of a battery arrangement;
Fig. 12 schematically shows a perspective view of an exemplary embodiment of a battery arrangement;
Fig. 13 schematically shows a flow diagram of an exemplary embodiment of a method for determining an age and/or state of health of a battery cell.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

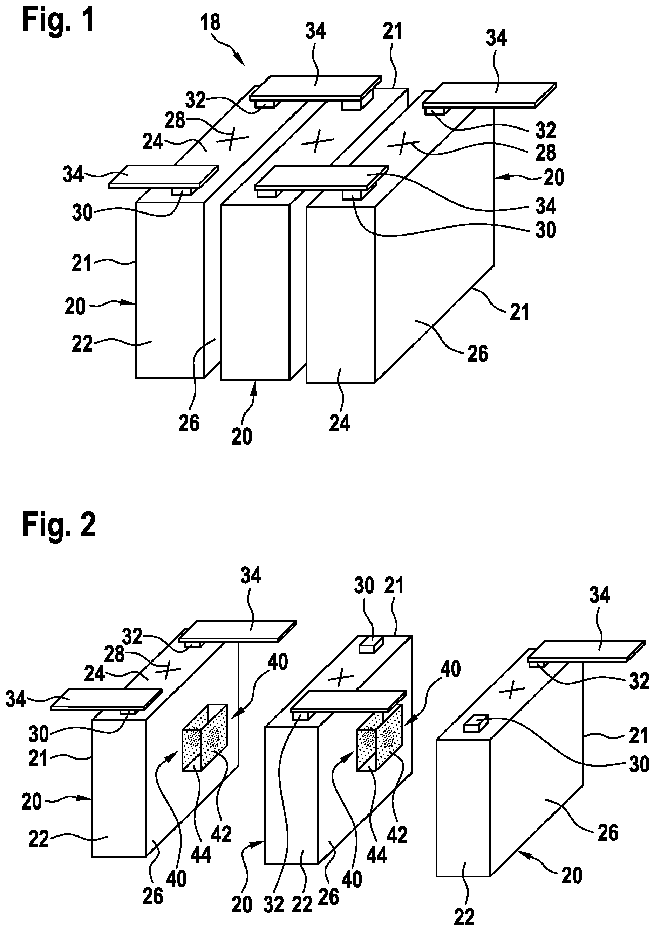

Fig. 1 schematically shows a perspective view of an exemplary embodiment of a battery arrangement 18. The battery arrangement 18 may comprise one or more, e.g. three battery cells 20. The battery arrangement 18 may be referred to as battery module. The battery arrangement 18 may comprise a housing (not shown), e.g. a module housing. For example, the battery arrangement 18 may be used for driving a car, a train, a subway, a bus, etc.

The battery cells 20 may be high-performance battery cells 20. Each of the high-performance battery cells 20 may have a nominal capacity between 1 Ah and 1000 Ah. The nominal capacity may be between 20 Ah and 500 Ah, e.g. between 25 Ah and 100 Ah.

The battery cells 20 each may comprise a cell body 21 and at least two electrical terminals, in particular a first terminal 30 and a second terminal 32. The cell bodies 21 each may comprise a first side 22, a second side 24 a third side 26. The first side 22 may be smaller than the second side 24, and the second side 24 may be smaller than the third side 26. Optionally, the cell bodies 21 each may have a prismatic shape. For example, the cell bodies 21 may have a cuboid shape.

The terminals 30, 32 may be arranged at opposing sides or at the same side of the cell body 21. The terminals 30, 32 may correspond to the poles of the battery cell 20. For example, one of the terminals 30, 32 may correspond to the plus-pole and the other one of the terminals 30, 32 may correspond to the minus-pole of the corresponding battery cell 20.

Adjacent battery cells 20 may be electrically coupled with each other by connectors 34. The connectors 34 may couple the first terminal 30 of one of the battery cells 20 with the second terminal 32 of one of the other battery cells 20.

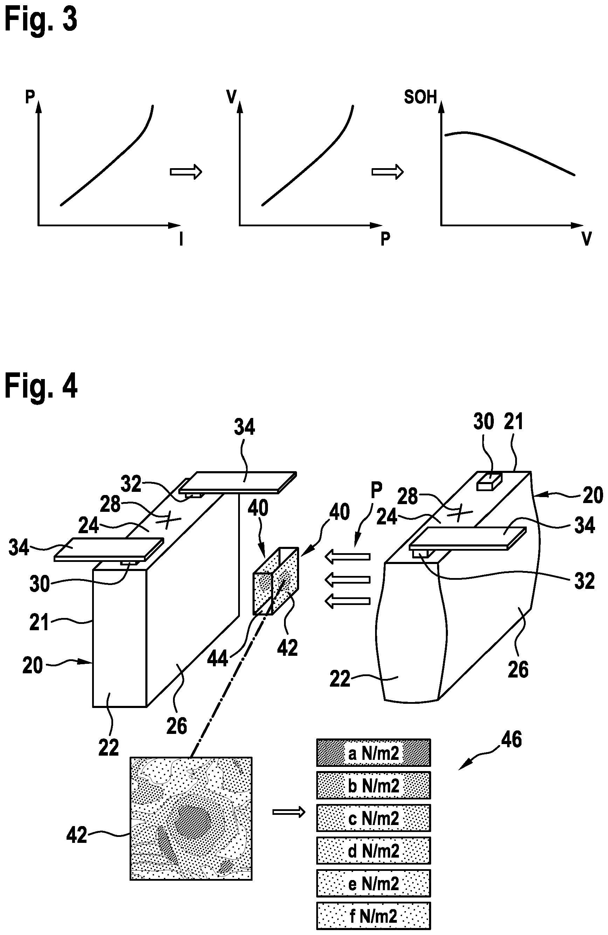

The high-performance battery cells 20 each may comprise a vent 28. The vent 28 may be configured to release gas from inside of the corresponding battery cell 20 if an internal pressure P (see e.g. figures 3 and 4) of the gas exceeds a predetermined gas pressure threshold. For example, the vent 28 may comprise or may consist of a vent disc and/or bursting disc.

Fig. 2 schematically shows an exploded view of the battery arrangement 18 of figure 1. From figure 2 it may be seen that at least one, e.g. two, i.e. a pair of, pressure sensors 40 may be arranged between adjacent battery cells 20. Optionally, a spacer 44 may be arranged between each pair of pressure sensors 40. The pressure sensors 40 may be arranged at an outer surface, e.g. the third side 26, of the corresponding cell body 21 such that it may be visible from outside of the corresponding cell body 21, at least if the battery cells 20 are separated from each other.

The pressure sensors 40 each may comprise a pressure indicating area 42 which is configured for changing its visual appearance depending on the pressure P acting on the corresponding pressure sensor 40, wherein the pressure indicating area 42 may be arranged such that it is visible from outside of the cell body 21. The pressure indicating area 42 may be configured to change its colour, transparency, and/or colour intensity depending on the pressure P acting on the pressure sensor 40, in particular the pressure indicating area 42. For example, a colour of the pressure indicating area 42, may change from white to pink when the pressure P acts on the pressure sensor 40, wherein the intensity of the pink may depend on an amount, e.g. a value, of the pressure P. In particular, a colour intensity of the pressure indicating area 42 may be directly related to the amount of pressure P applied to the pressure sensor 40.

The pressure sensors 40 each may comprise or may consist of a pressure sensing sheet representing the pressure indicating area 42. The pressure sensing sheet may be arranged at an outer surface of the cell body 21. In this embodiment, the pressure sensor 40 may consist of the pressure indicating area 42, wherein the pressure P acting on the pressure sensor 40 may be the pressure P acting on the pressure indicating area 40. The pressure sensing sheet may be a conventional pressure sensing sheet as it is known from the prior art.

The spacers 40 may be provided as counterforts against which the pressure sensors 40 may be pressed by the corresponding battery cell 20. Alternatively or additionally, the spacers 40 may be provided to transfer the pressure P generated in one of the battery cells 20 to the pressure sensor 40 of the adjacent battery cell 20. The latter may be useful for estimating the age and/or SOH of the whole battery arrangement 18.

The age and/or SOH of the battery cells 20 may be checked by a user or service personal by visually checking the appearance of the pressure indicating area 42. Alternatively, the status of the battery cell 20 may be checked automatically by a battery management system (BMS), as explained below.

Fig. 3 schematically shows examples of diagrams for estimating a state of health of a battery cell 20, e.g. one of the above battery cells 20. The left diagram of figure 3 shows a dependency of the pressure P from a colour intensity I of the colour of the pressure indicating area 42. In particular, the pressure P increases with increasing colour intensity I of the colour of the pressure indicating area 42. The middle diagram of figure 3 shows a dependency of a gas volume V within the battery cell 20 from the pressure P acting on the pressure indicating area 42. In particular, the gas volume V increases with increasing pressure P. The right diagram of figure 3 shows a dependency of the SOH from gas volume V within the battery cell 20. In particular, the SOH decreases with the increasing gas volume V. So, the SOH may be derived from the colour intensity I of the pressure indicating area 42.

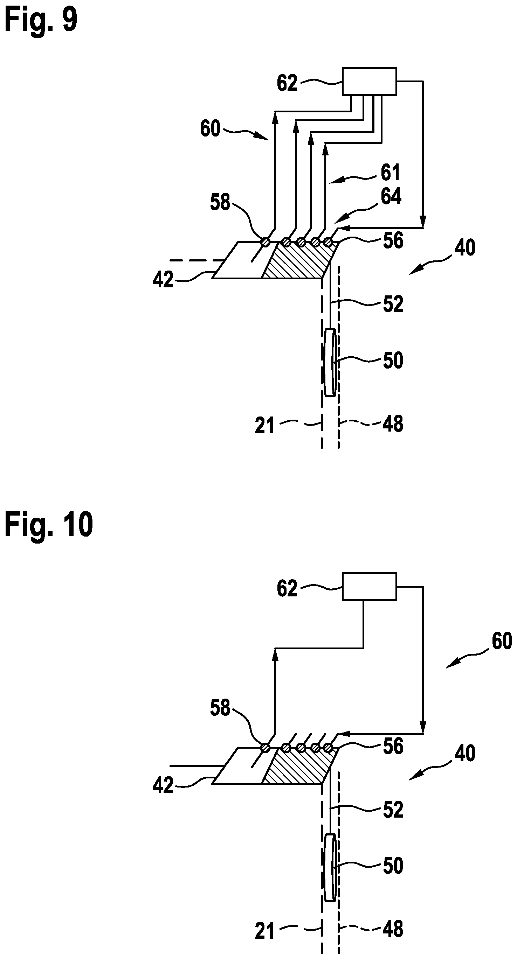

Optionally, the age of the battery cell 20 may be derived from the SOH. For example, an interdependence of the age and the SOH may be empirically determined in advance and may be stored in form of a characterising curve or table within a memory of a controller 62 (see figures 9, 10, 11) of the BMS coupled to the battery cell 20. Then, the controller 62 may easily determine the age of the battery cell 20 depending on the SOH by consulting the characterising curve or table.

Fig. 4 schematically shows a perspective view of an exemplary embodiment of a battery arrangement 18, a pressure sensor 40 and a colour code 46. The battery arrangement 18, in particular the battery cells 20 and the pressure sensor 40 may widely correspond to the above battery arrangement 18, battery cells 20, and, respectively, pressure sensor 40. Therefore, only those features of the battery arrangement 18, battery cells 20, and, respectively, pressure sensor 40 are explained in the following in which the battery arrangement 18 of figure 4 differs from the above battery arrangement 18.

From figure 4 it may be seen that the colour and/or colour intensity of the pressure indicating area 42 may change in correspondence with the pressure P acting on the pressure indicating area 42. In particular, some grades of the colour and/or colour intensity of the pressure indicating area 42 may be assigned to a predetermined pressure value a, b, c, d, e, f of the colour code 46. The colour code 46 may be provided to the user or the service personal, and/or may be stored in the memory of the controller 62.

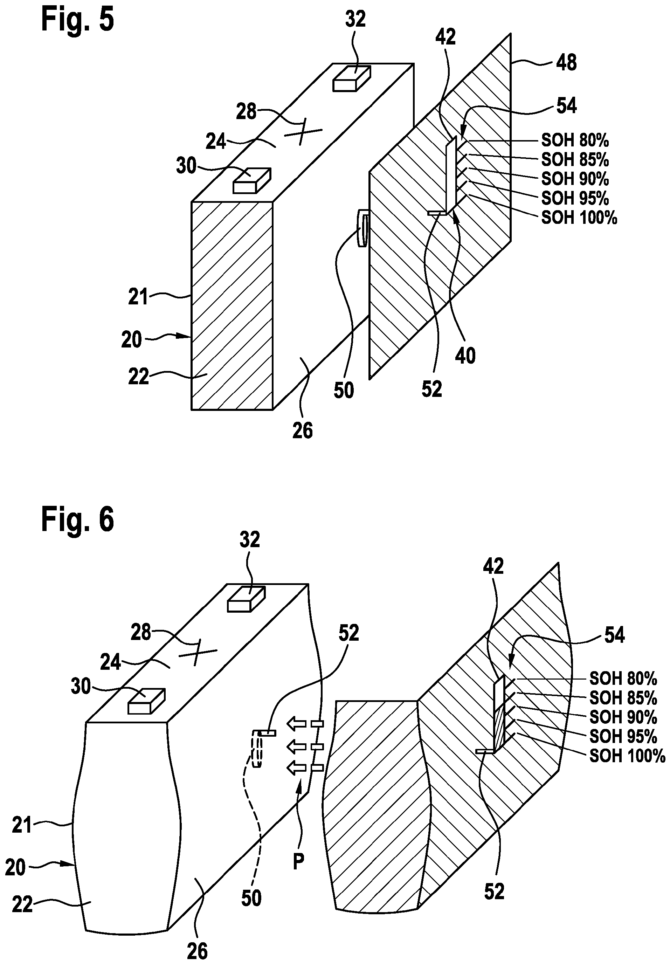

Fig. 5 schematically shows a perspective, partly exploded view of an exemplary embodiment of a battery cell 20 in a first state. The battery cell 20 may widely correspond to one of the above battery cells 20. Therefore, only those features of the battery cell 20 are explained in the following in which the battery cell 20 of figure 5 differs from the above battery cells 20.

The pressure sensor 40 may comprise a reservoir 50 within and/or at the cell body 21 and a capillary 52 connecting the reservoir 50 with the pressure indicating area 42. The reservoir 50 may be arranged at an outer wall of the cell body 21. Alternatively, the battery cell 20 may comprise a packaging film 48 for at least partly encapsulating the cell body 21, wherein the reservoir 50 may be arranged between the cell body 21 and the packaging film 48. The reservoir 50 and the pressure indicating area 42 may be arranged at the same side of the cell body 21, e.g. on the third side 26. The reservoir 50 may be a container. Optionally, the pressure indicating area 42 may comprise a scale 54, e.g. a legend, for interpreting the change of the visual appearance of the pressure indicating area 42. For example, the scale 54 may comprise different grades of the age and/or SOH of the battery cell 20.

An indicator liquid may be accommodated within the reservoir 50. The indicator liquid may be coloured, e.g. pink, red, blue, green, or yellow. The indicator liquid may be an ink or another liquid. For example, the indicator liquid may be electrically conductive. For example, the indicator liquid may be an electrically conductive ink.

The capillary 52 may comprise or may be a small tube or channel for guiding the indicator liquid from the reservoir 50 to the pressure indicating area 42.

The reservoir 50 may be configured for being squeezed by the pressure P within the cell body 21 such that the indicator liquid is pressed from the reservoir 50 through the capillary 52 towards the pressure indicating area 42 depending on the pressure P within the cell body 21. If the reservoir 50 is arranged at the outer wall of the cell body 21, the pressure P, i.e. an internal gas pressure of the battery cell 20, within the cell body 21 may directly act on the reservoir 50 thereby squeezing the indicator liquid out of the reservoir 50 into the capillary 52 and towards the pressure indicating area 42. Alternatively, the pressure may deform the cell body 21 and the deformation of the cell body 21 may cause the pressure P acting on the reservoir 50. If the reservoir 50 is arranged between the cell body 21 and the packaging film 48, the pressure P, i.e. the internal gas pressure, within the cell body 21 may deform the cell body 21 and the deformed cell body 21 may press the reservoir 50 against the packaging film 48 causing the pressure P on the reservoir 50.

The pressure indicating area 42 may comprise a cavity (not shown) for accommodating the indicator liquid depending on the pressure P within the cell body 21. So, if the indicator liquid is pressed to the pressure indicating area 42, the pressure indicating area 42, in particular the cavity, may be filled with the indicator liquid and may change its colour and/or its colour intensity depending on the colour of the indicator liquid. The higher the pressure P is, the more indicator liquid may be filled into the cavity. Alternatively, instead of the cavity, the pressure indicating area 42 may comprise a material for absorbing the indicator liquid, e.g. blotting paper, such that it changes the visual appearance of the pressure indicating area 42 depending on the absorbed amount of the indicator liquid. A liquid level within the cavity or the blotting paper may be indicated by the scale 54 next to or on the pressure indicating area 42, wherein the liquid level may be representative for the age and/or SOH of the battery cell 20.

In the first state shown in figure 5, the battery cell 20 may be new and not deformed, wherein the liquid level may be zero and the SOH may be 100%. A user or service personal may read the age and/or SOH of the battery cell 20 without any electrical tests or the requirement of a connection to a BMS directly from the scale 54.

Fig. 6 schematically shows a perspective, partly exploded view of the battery cell of figure 5 in a second state. In the second state, the battery cell 20 is old, degraded and deformed because of the gas pressure P within the battery cell 20. At least a part of the indicator liquid is pressed towards the pressure indicating area 42, e.g. into the cavity of the pressure indicating area 42. For example, the indicator liquid colours the lower part of the pressure indicating area until the SOH grade "SOH 85%" of the scale 54.

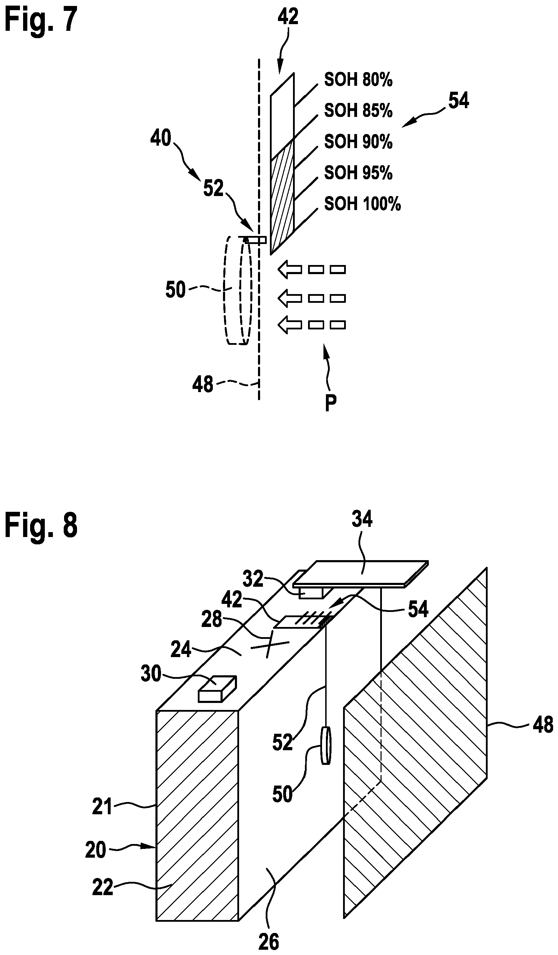

Fig. 7 schematically shows an exemplary embodiment of a pressure sensor, e.g. a detailed view of the pressure sensor 40 shown in figure 6.

Fig. 8 schematically shows a perspective, partly exploded view of an exemplary embodiment of a battery cell 20. The battery cell 20 may widely correspond to one of the above battery cells 20. Therefore, only those features of the battery cell 20 are explained in the following in which the battery cell 20 of figure 8 differs from the above battery cells 20.

The reservoir 50 and the pressure indicating area 42 may be arranged at different sides of the cell body 21. For example, the reservoir 50 may be arranged at a lateral side, e.g. the third side 26, of the battery cell 20 and the pressure indicating area 42 may be arranged at a top side, e.g. the second side 24, of the battery cell.

Fig. 9 schematically shows an exemplary embodiment of a pressure sensor 40. The pressure sensor 40 may widely correspond to one of the above pressure sensors 40. Therefore, only those features of the pressure sensor 40 are explained in the following in which the pressure sensor 40 of figure 9 differs from the above pressure sensors 40.

The battery cell 20 which comprises the pressure sensor 40 of figure 9 may comprise the both electrical contacts 56, 58 and one, two or more, e.g. three, further electrical contacts 64 arranged at a distance to each other within or at the cavity of the pressure indicating area 42. The electrical contacts 56, 58 may be arranged for being connected to a controller 62, e.g. the controller 62 of a battery management system (not shown), by an electric circuit 60, and the further electrical contacts 64 may be arranged for being connected to the controller 62 by corresponding further electric circuits 61. The controller 62 may be or may comprise a memory and a processor, e.g. a chip and/or an integrated circuit. At least a part of the electric circuit 60 and/or the further electric circuits 61 may be arranged at and/or on the battery cell 20. The electrical contacts 56, 58, 64 may be configured for signalling the pressure P within the cell body 21 when the indicator liquid electrically connects two or more of the electrical contacts 56, 58, 64 with each other via the corresponding electric circuit 60, 61. The electrical contacts 56, 58, 64 may be configured such that they are electrically connected by the indicator liquid when a predetermined amount of indicator liquid is pressed into the cavity. The predetermined amount of indicator liquid may be representative for a predetermined pressure P acting on the reservoir 50. The predetermined pressure P may be representative for a predetermined age and/or SOH of the battery cell 20. The more indicator liquid is within the cavity, the more of the electrical contacts 56, 58, 64 may be electrically connected to each other by the indicator liquid and the more of the electric circuits 60, 61 will be closed. A current provided by the controller 62 may flow through connected electrical contacts 56, 58, 64 and the correspondingly closed electric circuits 60, 61, wherein a value of the current may depend on which and/or how many of the electric circuits 60, 61 are closed. So, when the electrically conductive indicator liquid arrives at certain SOH value (e.g., 90%, 80%), the corresponding electrical circuit 60, 61 is closed, what may be detected by the controller 62.

So, the electrical contacts 56, 58 may be configured such that, if the electrical contacts 56, 58 are connected to the BMS and if the indicator liquid electrically connects the electrical contacts 56, 58, the electric circuit 60 is closed and a small current may flow through the electrical contacts 56, 58 and the indicator liquid. The BMS may sense the current and may estimate an age and/or a state of health of the battery cell 20 depending on the sensed current, wherein the sensed current is representative for the predetermined amount of indicator liquid within the cavity. If there are more than two electrical contacts 56, 58, e.g. arranged with predetermined distances to each other, e.g. such as in form of a scale, as shown in figure 9, correspondingly more different liquid levels may be sensed depending on the electrical circuit 60 closed by the indicator liquid and the corresponding electrical contacts 56, 58. For example, N-1 liquid levels may be sensed by N different electrical contacts, with N being a natural number.

Fig. 10 schematically shows an exemplary embodiment of a pressure sensor 40. The pressure sensor 40 may widely correspond to the pressure sensor 40 explained with respect to figure 9. Therefore, only those features of the pressure sensor 40 are explained in the following in which the pressure sensor 40 of figure 10 differs from the pressure sensor 40 of figure 9.

The pressure sensor 40 may comprise two electrical contacts 56, 58 only. The first electrical contact 56 may be arranged at a position at which the indicator liquid may enter the cavity and the second electrical contact 58 may be arranged at a position which is reached by the indicator liquid when the cavity is completely filled with the indicator liquid. The pressure indicating area 42 to which the electrical contacts are connected may be configured to conduct at least a small current even if no indicator liquid is present within the cavity. However, if the indicator liquid enters the cavity, the electrical resistance of the pressure indicating area 42 may be lowered by the electrically conductive indicator liquid and the current may increase depending on the amount of indicator liquid within the cavity. The amount of indicator liquid within the cavity may be representative for the pressure P acting on the reservoir 50. The pressure P within the battery cell 20 may be representative for the age and/or SOH of the battery cell 20. So, the current sensed by the controller 62 may be representative for the age and/or SOH of the battery cell 20.

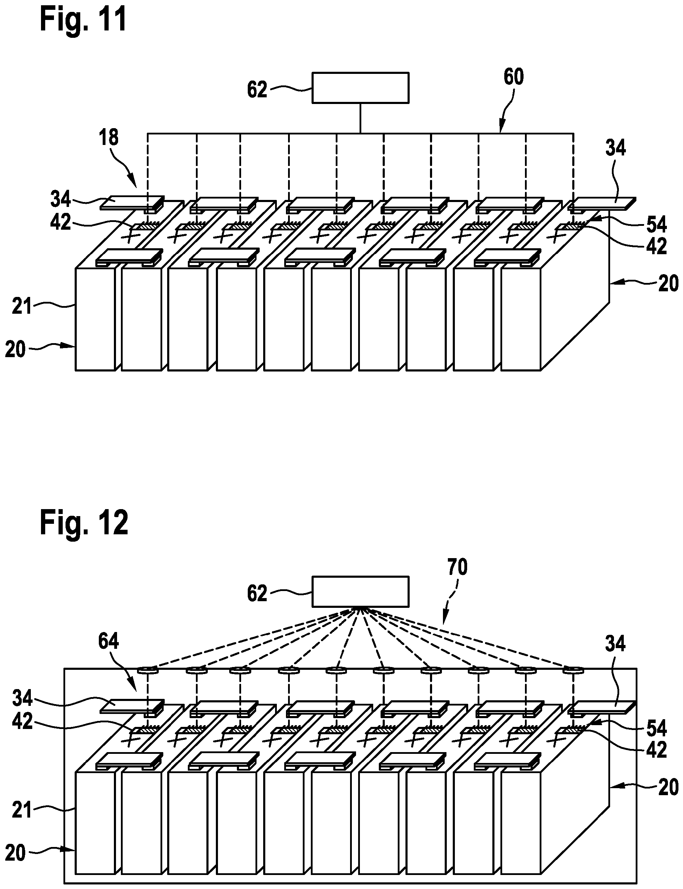

Fig. 11 schematically shows a perspective view of an exemplary embodiment of a battery arrangement 18. The battery arrangement 18 may widely correspond to one of the above battery arrangements 18. Therefore, only those features of the battery arrangement 18 are explained in the following in which the battery arrangement 18 of figure 11 differs from the above battery arrangements 18.

The battery cells 20 of the battery arrangement 18 each may be equipped with one of the pressure sensors 40 explained with respect to figures 9 or 10. The pressure sensors 40 may be connected to the controller 62 by the electric circuit 60. The controller 62 may be an element of the BMS.

Fig. 12 schematically shows a perspective view of an exemplary embodiment of a battery arrangement 18. The battery arrangement 18 may widely correspond to the battery arrangement 18 of figure 11. Therefore, only those features of the battery arrangement 18 are explained in the following in which the battery arrangement 18 of figure 12 differs from the battery arrangement 18 of figure 11.

The battery arrangement 18 may comprise an optical sensor 66 and at least one light guide 70, e.g. an optical fibre, for each of the pressure sensors 40. The optical sensor 66 may be a digital camera, e.g. a CCD camera. The light guides 70 may be arranged such that light from the pressure indicating areas 42 may be guided through the light guides 70 to the optical sensor 66. The optical sensor 66 may be coupled to the BMS or may be a part of the BMS. The optical sensor 66 may generate a signal representative for the observed pressure indicating areas 42. The BMS, in particular the controller 62 of the BMS may receive the signal and may determine the age and/or SOH of each of the battery cells 20 from the data encoded within the signal. Alternatively, one optical sensor 66 may be provided for each of the battery cells 20, wherein the light guides 70 may be omitted if the optical sensors 66 are arranged such that the corresponding pressure indicating area 42 is within the field of view of the corresponding optical sensor.

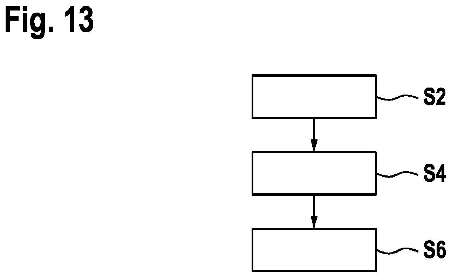

Fig. 13 schematically shows a flow diagram of an exemplary embodiment of a method for determining an age and/or state of health of a battery cell, e.g. one of the above battery cells 20.

In a step S2, a visual appearance of the pressure indicating area 42 of the battery cell 20 may be determined. The visual appearance of the pressure indicating area 42 may be determined by the optical sensor 66 and the controller 62, or by the electric circuit 60 connected to the electrical contacts 56, 58. For example, it may be determined how much indicator liquid is within the cavity of the pressure indicating area 42.

In a step S4, the pressure P within the battery cell 20 may be determined depending on the visual appearance of the pressure indicating area 42, e.g. depending on the amount of indicator liquid within the cavity. The pressure P may be determined by the controller 62.

In a step S6, the age and/or SOH of the battery cell 20 may be determined depending on the pressure P, e.g. by the controller 62.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. For example, all of the above battery cells 20 may be configured as stand-alone battery cell, within one of the battery arrangements 18, e.g. within corresponding battery modules, and/or within a battery pack comprising one or more of the battery arrangements 18 and optionally the controller 62 and/or the BMS.

In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 18: battery arrangement
- 20: battery cell
- 21: cell body
- 22: top side
- 24: bottom side
- 26: lateral side
- 28: vent
- 30: first terminal
- 32: second terminal
- 34: cell connector
- 40: pressure sensor
- 42: pressure indicating area
- 44: spacer
- 46: colour code
- 48: packaging film
- 50: reservoir
- 52: capillary
- 54: scale
- 56: first electrical contact
- 58: second electrical contact
- 60: electric circuit
- 61: further electric circuits
- 62: controller
- 64: further electric contacts
- 66: optical sensor
- 70: light guides
- 72: optical sensor
- P: pressure
- I: colour intensity
- V: volume
- SOH: state of health
- a to f: pressure values

## Claims

1. A battery cell (20), comprising:
a cell body (21);
at least two electrical terminals (30, 32) for providing and/or receiving electrical energy; and
at least one pressure sensor (40) being arranged within and/or at the cell body (21) and comprising a pressure indicating area (42) which is configured for changing its visual appearance depending on a pressure (P) acting on the pressure sensor (40), wherein the pressure indicating area (42) is arranged such that it is visible from outside of the cell body (21).

2. The battery cell (20) in accordance with claim 1, wherein
the pressure indicating area (42) is configured to change its colour, transparency, and/or colour intensity depending on the pressure (P) acting on the pressure sensor (40).

3. The battery cell (20) in accordance with any one of claims 1 or 2, wherein
the pressure sensor (40) comprises or consists of a pressure sensing sheet representing the pressure indicating area (42), and is arranged at an outer surface of the cell body (21).

4. The battery cell (20) in accordance with one of claims 1 or 2, wherein
the pressure sensor (40) comprises a reservoir (50) within and/or at the cell body (21) and a capillary (52) connecting the reservoir (50) with the pressure indicating area (42);
an indicator liquid is accommodated within the reservoir (50); and
the reservoir (50) is configured for being squeezed by the pressure (P) within the cell body (21) such that the indicator liquid is pressed from the reservoir (50) through the capillary (52) towards the pressure indicating area (42) depending on the pressure (P) within the cell body (21).

5. The battery cell (20) in accordance with claim 4, wherein
the reservoir (50) is arranged at an outer wall of the cell body (21).

6. The battery cell (20) in accordance with claim 4, comprising
a packaging film (48) for at least partly encapsulating the cell body (21), wherein the reservoir (50) is arranged between the cell body (21) and the packaging film (48).

7. The battery cell (20) in accordance with one of claims 4 to 6, wherein
the reservoir (50) and the pressure indicating area (42) are arranged at the same side of the cell body (21) or at different sides of the cell body (21).

8. The battery cell (20) in accordance with any one of claims 4 to 7, wherein
the pressure indicating area (42) comprises a cavity for accommodating the indicator liquid depending on the pressure (P) within the cell body (21).

9. The battery cell (20) in accordance with any one of claims 4 to 8, wherein
the indicator liquid is electrically conductive.

10. The battery cell (20) in accordance with claim 9, comprising
at least two electrical contacts (56, 58) arranged at a distance to each other within or at the cavity of the pressure indicating area (42), the electrical contacts (56, 58) being arranged for being connected to a battery management system and being configured for signalling the pressure (P) within the cell body (21) when the indicator liquid electrically connects both electrical contacts (56, 58) with each other.

11. A battery arrangement (50), comprising:
at least two battery cells (20) in accordance with any one of the preceding claims, wherein the battery cells (20) are arranged adjacent to each other such that a deformation of one of the cell bodies (21) of the battery cells (20) causes a pressure (P) on the pressure sensor (40) of the other battery cell (20).

12. The battery arrangement (50) of claim 11, comprising:
a spacer (44) being arranged between the pressure sensors (40) of the adjacent battery cells (20) such that the pressure (P) is transferred from one of the battery cells (20) to the pressure sensor (40) of the other battery cell (20) by the spacer (44).

13. A battery arrangement (50), comprising:
at least one battery cell (20) in accordance with one of claims 1 to 10; and
a controller (62) for estimating an age and/or a state of health (SOH) of one or more of the battery cells (20) by checking the visual appearance of the pressure indicating area (42) of the corresponding pressure sensor (40).

14. The battery arrangement (50) in accordance with claim 13, comprising:
at least one optical sensor (72) being coupled to the controller (62), being arranged such that the pressure indicating area (42) is within a field of view of the optical sensor (72), and being configured for detecting the visual appearance of the corresponding pressure sensor (40) of the battery cell (20) and for generating a signal representing the visual appearance of the pressure sensor (40).

15. The battery arrangement (50) in accordance with claim 13, wherein
the controller (62) is coupled to the electrical contacts (56, 58) within or at the cavity of the pressure indicating area (42) of the pressure sensor (40) of the one or more battery cells (20), and is configured for sensing the current flowing through the electrical contacts (56, 58) because of the indicator liquid within the cavity electrically coupling the electrical contacts (56, 58) and for determining the pressure (P) depending on the visual appearance of the pressure sensor (40) depending on the sensed current.
